# FASCICULE DE BREVET EUROPEEN

(11) **EP 3 599 430 B1**
(45) Date de publication et mention de la délivrance du brevet: **15.09.2021**
(21) Numéro de dépôt: 19188607.6
(22) Date de dépôt: 26.07.2019
(51) Int. Cl.: F24F 13/20, F24F 13/30, F24F 12/00

(54) **APPAREIL MONOBLOC DE TRAITEMENT CLIMATIQUE ET DE RENOUVELLEMENT D'AIR POUR UN LOCAL SITUÉ DANS UN BÂTIMENT**
MONOBLOCK-GERÄT ZUR KLIMATISIERUNG UND LUFTERNEUERUNG IN EINEM RAUM, DER SICH IN EINEM GEBÄUDE BEFINDET
SINGLE-PIECE DEVICE FOR CLIMATE TREATMENT AND AIR RENEWAL FOR A ROOM LOCATED IN A BUILDING

(30) Priorité: 27.07.2018 FR 1857001
(43) Date de publication de la demande: 29.01.2020
(73) Titulaire: MULLER ET CIE, 75018 Paris (FR)
(72) Inventeur: MOUSSET, Stéphane, 64500 CIBOURE (FR)
(74) Mandataire: Lavoix

(56) Documents cités:
- EP-A1- 0 055 000
- WO-A1-01/71259
- DE-A1- 3 315 444
- DE-A1- 3 700 944

## Description

La présente invention concerne un appareil de traitement climatique et de renouvellement d'air pour un local situé dans un bâtiment, configuré sous forme monobloc et délimité par une enceinte externe destinée à être disposée à l'intérieur du local ; une bouche d'entrée et une bouche de sortie d'air extérieur, destinées à être raccordées à l'extérieur du bâtiment, étant ménagées sur ladite enceinte externe.

L'invention s'applique particulièrement aux locaux de bâtiments recevant du public, tels que des bureaux, des salles de réunion, des chambres d'hôtel ou des locaux hospitaliers.

Dans de tels locaux, tels que les immeubles de bureau, il est connu d'assurer le traitement climatique et le renouvellement d'air au moyen d'une centrale de traitement, reliée à plusieurs locaux par des gaines techniques.

De telles centrales de traitement, dimensionnées pout traiter de gros volumes d'air, sont généralement encombrantes. Il en est de même pour les nombreuses gaines techniques nécessaires.

Le document DE 33 15 444 A1 montre un appareil de traitement climatique et de renouvellement d'air pour un local situé dans un bâtiment, configuré sous forme monobloc et délimité par une enceinte externe destinée à être disposée à l'intérieur du local. Ledit document montre également une bouche d'entrée et une bouche de sortie d'air extérieur, destinées à être raccordées à l'extérieur du bâtiment, étant ménagées sur ladite enceinte externe. Ledit appareil comporte quatre circuits d'air comprenant des entrées et sorties et des échangeurs thermiques air/fluide frigorigène.

Le document EP3124884 décrit un appareil monobloc de traitement climatique et de renouvellement d'air, apte à traiter un local individuel d'un bâtiment. Ledit appareil est configuré pour être disposé dans le plénum d'un faux plafond, afin de limiter l'encombrement dans le local.

Un tel appareil nécessite cependant d'équiper le bâtiment d'une boucle d'eau chaude et d'une boucle d'eau glacée en tant que sources d'énergie thermique.

La présente invention a pour but d'améliorer les dispositifs existants, en proposant notamment un appareil de traitement climatique et de renouvellement d'air, intégrant un moyen de production d'énergie thermique tout en présentant un faible encombrement et des facilités d'installation.

A cet effet, l'invention a pour objet un appareil du type précité, comportant : un premier circuit d'air, comprenant une première entrée et une première sortie ; ainsi qu'un premier ventilateur et un premier échangeur thermique air/fluide frigorigène disposés entre la première entrée et la première sortie ; un deuxième circuit d'air, comprenant une deuxième entrée et une deuxième sortie respectivement disposées au niveau de la bouche d'entrée et de la bouche de sortie ; ainsi qu'un deuxième ventilateur et un deuxième échangeur thermique air/fluide frigorigène disposés entre la deuxième entrée et la deuxième sortie ; un troisième circuit d'air, comprenant une troisième entrée indépendante de la première entrée, une troisième sortie débouchant sur le deuxième circuit entre le deuxième échangeur thermique et la deuxième sortie ; ainsi qu'un troisième ventilateur et un troisième échangeur thermique air/air disposés entre la troisième entrée et la troisième sortie ; un quatrième circuit d'air, comprenant une quatrième entrée débouchant sur le deuxième circuit entre la deuxième entrée et le deuxième échangeur thermique, une quatrième sortie débouchant sur le premier circuit entre le premier échangeur thermique et la première sortie ; le troisième échangeur thermique air/air étant disposé entre les quatrièmes entrée et sortie, de sorte à permettre un échange thermique entre l'air circulant dans le troisième et l'air circulant dans le quatrième circuits. Les première et troisième entrées et la première sortie d'air sont disposées en surface de l'enceinte externe et destinées à être situées à l'intérieur du local ; les premier et deuxième échangeurs thermiques air/fluide frigorigène font partie d'une pompe à chaleur disposée dans l'enceinte de l'appareil.

Suivant d'autres aspects avantageux de l'invention, l'appareil comporte l'une ou plusieurs des caractéristiques suivantes, prises isolément ou suivant toutes les combinaisons techniquement possibles :
- l'appareil comporte en outre un premier organe de régulation de débit d'air, disposé au niveau de la quatrième entrée ;
- l'appareil comporte en outre un cinquième circuit d'air, ledit cinquième circuit comprenant : une cinquième entrée, indépendante de la quatrième entrée et débouchant sur le deuxième circuit entre la deuxième entrée et le deuxième échangeur thermique, une cinquième sortie, indépendante de la quatrième sortie et débouchant sur le premier circuit entre le premier échangeur thermique et la première sortie, et un deuxième organe de régulation de débit d'air. Comme décrit ci-après, cette caractéristique permet la mise en place d'un mode « free cooling » pour refroidir l'air intérieur sans utiliser la pompe à chaleur ;
- la pompe à chaleur comporte un compresseur, un détendeur et un sixième circuit de fluide frigorigène reliant lesdits compresseur et détendeur aux premier et deuxième échangeurs thermiques, un premier compartiment ménagé à l'intérieur de l'enceinte recevant ledit compresseur, ledit premier compartiment étant disposé sur le deuxième circuit d'air en aval du deuxième échangeur thermique, la troisième sortie débouchant sur ledit premier compartiment. Comme décrit ci-après, cette caractéristique permet de refroidir le compresseur à l'aide de l'air rejeté à l'extérieur ;
- l'appareil comporte en outre des composants électriques et/ou électroniques, un deuxième compartiment ménagé à l'intérieur de l'enceinte recevant lesdits composants, ledit deuxième compartiment étant disposé sur le troisième circuit d'air, en amont du troisième échangeur thermique. Comme décrit ci-après, cette caractéristique permet de refroidir les composants électriques et/ou électroniques à l'aide d'air rejeté à l'extérieur ;
- l'enceinte externe est sensiblement parallélépipédique, comprenant notamment une face avant, une face arrière et une face supérieure, la bouche d'entrée et la bouche de sortie d'air extérieur étant disposées en face arrière de l'enceinte ;
- le troisième échangeur thermique air/air est disposé sensiblement à l'arrière de l'appareil, entre les bouches d'entrée et de sortie selon une direction horizontale ;
- un troisième compartiment ménagé à l'intérieur de l'enceinte reçoit le troisième échangeur thermique, une trappe disposée en face supérieure de l'enceinte donnant accès audit troisième compartiment. Comme décrit ci-après, cette caractéristique permet de démonter le troisième échangeur par le haut de l'appareil, pour nettoyage ou remplacement ;
- le troisième compartiment comprend un dispositif d'assemblage amovible avec le troisième échangeur thermique, permettant d'extraire et de remettre ledit troisième échangeur hors du et dans ledit troisième compartiment par la trappe ;
- les bouches d'entrée et de sortie d'air extérieur sont situées en partie basse de la face arrière de l'enceinte ; et la troisième entrée d'air est située en partie haute de la face avant de l'enceinte. Comme décrit ci-après, cette caractéristique permet de faire circuler de haut en bas l'air sortant du local, ce qui facilite la récupération des condensats en période hivernale.
- la première entrée d'air est située en partie haute de la face avant de l'enceinte ; et la première sortie d'air est située en face supérieure de l'enceinte ;
- l'appareil comprend deux canalisations d'air formant saillie par rapport à la face arrière de l'enceinte et destinées à déboucher à l'extérieur du bâtiment, dans lequel chacune de la bouche d'entrée et la bouche de sortie d'air extérieur est formée par l'une desdites canalisations d'air. Comme décrit ci-après, cette caractéristique permet de ne percer que deux orifices traversants au total en façade du bâtiment, pour le traitement thermique et le renouvellement d'air.

L'invention se rapporte en outre à une installation de traitement climatique et de renouvellement d'air, comprenant : un bâtiment comprenant une paroi extérieure, ladite paroi définissant un local situé dans ledit bâtiment ; et un appareil de traitement climatique et de renouvellement d'air tel que décrit ci-dessus, dans laquelle : la paroi extérieure comprend deux orifices traversants débouchant sur le local d'une part, et sur l'extérieur du bâtiment d'autre part ; et l'enceinte de l'appareil est située dans le local, chacune des deux canalisations d'air de l'appareil étant disposée dans l'un desdits orifices traversants.

L'invention sera mieux comprise à la lecture de la description qui va suivre, donnée uniquement à titre d'exemple non limitatif et faite en se référant aux dessins sur lesquels :
- la figure 1 est un schéma de principe des circuits d'un appareil de traitement climatique et de renouvellement d'air selon un mode de réalisation de l'invention ;
- les figures 2 à 5 sont des vues schématiques, en coupe, de l'appareil de la figure 1 ; et
- la figure 6 est une vue schématique, en coupe, d'une installation comprenant l'appareil des figures 2 à 5 installé dans un local d'un bâtiment.

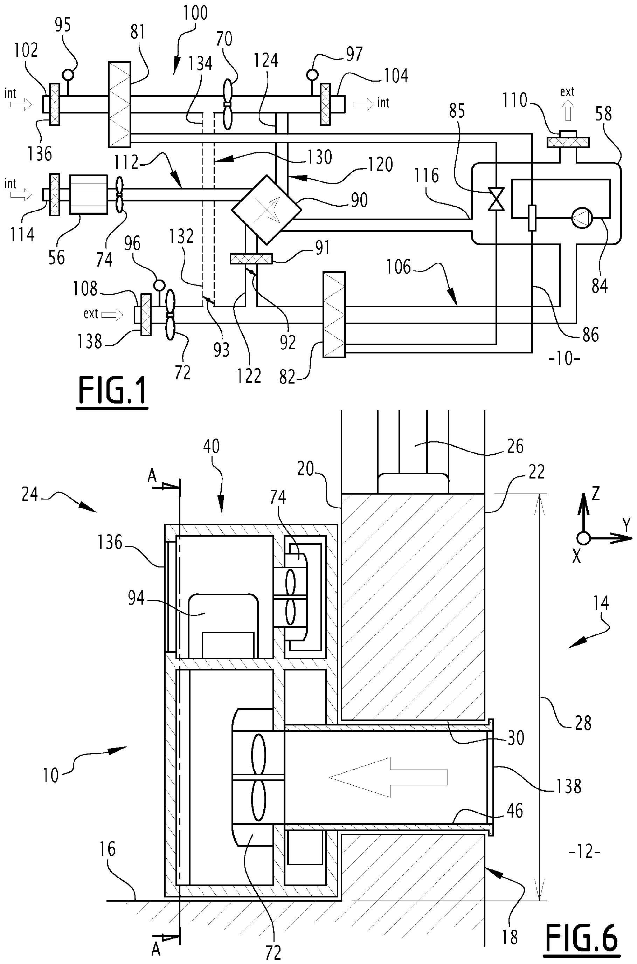

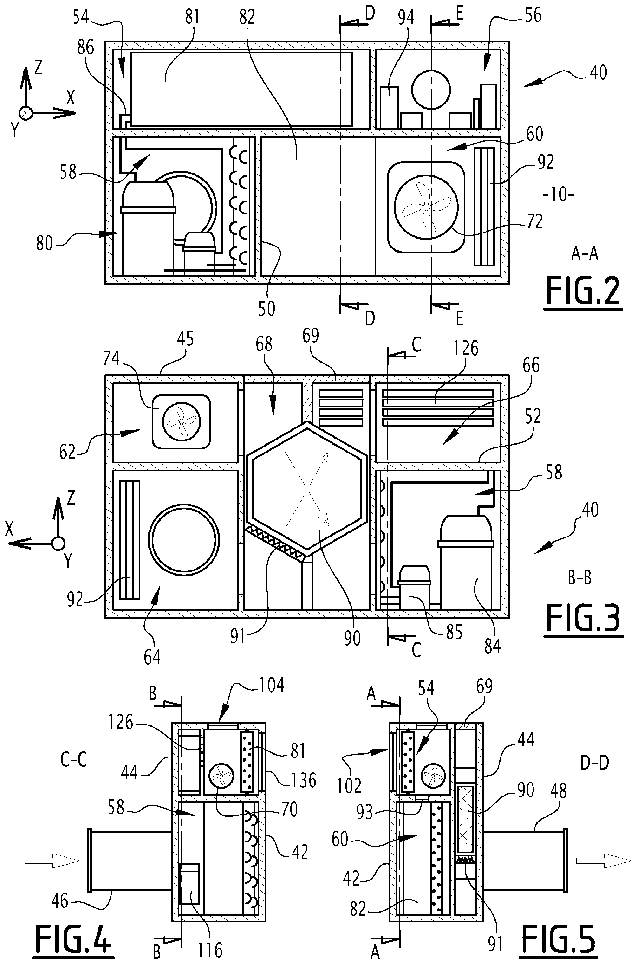

Les figures 2 à 6 sont des vues schématiques en trois dimensions d'un appareil 10 de traitement climatique et de renouvellement d'air selon un mode de réalisation de l'invention. Un schéma de principe de l'appareil 10 est représenté à la figure 1.

L'appareil 10 est destiné à faire partie d'une installation 12 de traitement climatique et de renouvellement d'air telle que représentée à la figure 6.

L'installation 12 comporte l'appareil 10 et un bâtiment 14. Dans la description qui suit, on considère une base orthonormée (X, Y, Z), la direction Z représentant la verticale.

Le bâtiment 14 comprend un plancher horizontal 16 et une paroi extérieure verticale 18. On considère que ladite paroi comporte une face interne 20 et une face externe 22 sensiblement disposées dans des plans (X, Z).

Le plancher 16 et la paroi 18 contribuent à définir un local 24 situé dans le bâtiment 14, la face interne 20 de la paroi étant orientée vers ledit local. La face externe 22 est orientée vers l'extérieur du bâtiment 14.

De manière optionnelle, comme représenté sur la figure 6, la paroi extérieure 18 est munie d'une fenêtre 26 située à une hauteur 28 par rapport au plancher 16.

En outre, la paroi extérieure 18 comprend deux orifices traversants 30 débouchant sur les faces interne 20 et externe 22. Les orifices traversants 30 sont sensiblement situés dans un même plan (X, Y), disposé entre le plancher 16 et la fenêtre 26.

Dans la suite de la description, l'appareil 10 est décrit selon sa position installée dans l'installation 12.

L'appareil 10 est configuré sous forme monobloc et comprend une enceinte externe 40, qui délimite essentiellement un contour externe dudit appareil.

L'enceinte externe 40 a une forme sensiblement parallélépipédique et comprend notamment : une face avant 42 et une face arrière 44, disposées dans des plans (X, Z), et une face supérieure 45 disposée dans un plan (X, Y).

L'appareil 10 comprend en outre une première 46 et une deuxième 48 canalisations d'air, formant saillie selon Y par rapport à la face arrière 44 de l'enceinte 40 et délimitant le contour externe de l'appareil avec ladite enceinte. De préférence, les première 46 et deuxième 48 canalisations sont disposées aux extrémités opposées, selon X, de l'appareil 10, de manière à ménager un espacement maximal entre lesdites canalisations.

Dans l'installation 12, comme visible sur la figure 6, l'enceinte externe 40 est située dans le local 24, la face arrière 44 est disposée en vis-à-vis de la face interne 20 de la paroi extérieure 18 du bâtiment. Chacune des canalisations d'air 46, 48 est disposée dans un orifice traversant 30 de ladite paroi extérieure 18. Ainsi, le terme « monobloc » appliqué à l'appareil 10 s'entend par opposition à des dispositifs de traitement d'air comprenant deux blocs distincts, respectivement situés à l'intérieur et à l'extérieur d'un même bâtiment.

L'appareil 10 comprend en outre plusieurs cloisons internes verticales 50 ou horizontales 52, qui définissent plusieurs compartiments à l'intérieur de l'enceinte externe 40. Comme visible sur la figure 2, les compartiments en contact avec la face avant 42 de l'enceinte 40 sont : un compartiment 54 de traitement thermique de l'air intérieur, et un compartiment électrique 56, situés en partie haute de l'appareil 10 ; et un compartiment PAC 58 et un compartiment 60 d'arrivée d'air extérieur, situés en partie basse de l'appareil 10.

Comme visible sur la figure 3, les compartiments en contact avec la face arrière 44 de l'enceinte 40 sont : un compartiment 62 d'extraction d'air vicié, situé derrière le compartiment électrique 56 ; un compartiment 64 d'introduction d'air neuf, situé derrière le compartiment 60 d'arrivée d'air extérieur et sous le compartiment 62 d'extraction d'air vicié ; le compartiment PAC 58 ; un compartiment 66 de mélange, situé au-dessus du compartiment PAC et derrière le compartiment de traitement thermique 54 ; et un compartiment 68 d'échange thermique air-air.

Une extrémité interne de la première canalisation 46 traverse le compartiment 64 d'introduction d'air neuf et débouche dans le compartiment 60 d'arrivée d'air extérieur. Une extrémité interne de la deuxième canalisation 48 débouche sur le compartiment PAC 58.

Le compartiment d'échange thermique 68 s'étend sensiblement sur toute la hauteur de l'appareil 10. Une trappe 69, disposée en face supérieure 45 de l'enceinte 40, donne accès audit compartiment.

Selon la direction X, le compartiment d'échange thermique 68 est situé en partie centrale de l'appareil 10. En particulier, le compartiment d'échange thermique 68 est situé d'une part entre le compartiment 62 d'extraction d'air vicié et le compartiment 66 de mélange, et d'autre part entre le compartiment 64 d'introduction d'air neuf et le compartiment PAC 58.

L'appareil 10 comprend en outre différents équipements, reçus dans les compartiments indiqués ci-dessus.

En particulier, l'appareil 10 comprend un premier 70, un deuxième 72 et un troisième 74 ventilateurs, respectivement disposés dans le compartiment 54 de traitement thermique, dans le compartiment 60 d'arrivée d'air extérieur et dans le compartiment 62 d'extraction d'air vicié.

L'appareil 10 comprend également une pompe à chaleur 80, ladite pompe à chaleur comprenant ; un premier 81 et un deuxième 82 échangeurs thermiques air/fluide frigorigène, un compresseur 84 ; un détendeur 85 ; et un circuit 86 de fluide frigorigène reliant ces différents éléments. Le premier échangeur 81 est disposé dans le compartiment 54 de traitement thermique. Le deuxième échangeur 82 sépare le compartiment 60 d'arrivée d'air extérieur et le compartiment PAC 58. Le compresseur 84 et le détendeur 85 sont reçus dans ledit compartiment PAC.

De préférence, la pompe à chaleur 80 est réversible, les premier 81 et deuxième 82 échangeurs pouvant céder des calories à l'air ou au contraire en extraire des calories.

L'appareil 10 comprend également un troisième échangeur thermique 90 air/air, reçu dans le compartiment 68 d'échange thermique. De préférence, ledit compartiment et ledit troisième échangeur sont équipés d'un dispositif d'assemblage amovible (non représenté), tel que des glissières. Ce dispositif permet d'extraire et de réintroduire ledit troisième échangeur par la trappe 69, afin de procéder à des opérations d'entretien sur ledit échangeur.

L'appareil 10 comprend également un filtre à air 91, également reçu dans le compartiment 68 d'échange thermique. Dans le mode de réalisation représenté, le filtre à air 91 est solidaire du troisième échangeur thermique 90 et peut ainsi être extrait pour entretien de l'appareil 10.

L'appareil 10 comprend également un premier organe de régulation de débit d'air, tel qu'un premier registre 92, disposé entre le compartiment 60 d'arrivée d'air extérieur et le compartiment 64 d'introduction d'air neuf.

L'appareil 10 comprend également un deuxième organe de régulation de débit d'air, tel qu'un deuxième registre 93, disposé entre le compartiment 60 d'arrivée d'air extérieur et le compartiment de traitement thermique 54.

L'appareil 10 comprend également des composants électriques et/ou électroniques, notamment un module électronique 94 de régulation, reçus dans le compartiment électrique 56.

L'appareil 10 comprend également des sondes 95, 96, 97, représentées sur la figure 1 et reliées audit module électronique 94. Les sondes sont notamment aptes à mesurer une température à l'intérieur ou à l'extérieur du bâtiment 14, ou encore un taux de pollution de l'air (de type CO₂ ou COV) dans le local 24. Selon un mode de réalisation, une sonde est apte à détecter la présence ou l'absence d'occupants dans le local 24.

Comme il sera décrit par la suite, certains des compartiments ci-dessus communiquent entre eux de sorte à définir des circuits d'air à l'intérieur de l'appareil 10.

Les circuits de l'appareil 10, notamment les circuits d'air, sont schématisés sur la figure 1.

L'appareil 10 comprend un premier circuit 100 de traitement thermique de l'air intérieur du local. Le premier circuit 100 comprend une première entrée 102 et une première sortie 104, débouchant sur le compartiment de traitement thermique 54. De préférence, les premières entrée 102 et sortie 104 sont disposées respectivement au niveau de la face avant 42 et de la face supérieure 45 de l'enveloppe externe 40.

L'appareil 10 comprend un deuxième circuit 106 d'air extérieur. Le deuxième circuit comprend une deuxième entrée 108 et une deuxième sortie 110, respectivement disposées de la première canalisation 46, ou bouche d'entrée, et de la deuxième canalisation 48, ou bouche de sortie.

Les premier 70 et deuxième 72 ventilateurs sont disposés respectivement sur le premier 100 et sur le deuxième 106 circuits. De même, les premier 81 et deuxième 82 échangeurs thermiques de la pompe à chaleur 80 sont disposés respectivement sur le premier 100 et sur le deuxième 106 circuits.

Par ailleurs, le compartiment PAC 58, recevant le compresseur 84 et le détendeur 85, est disposé sur le deuxième circuit 106 à proximité de la deuxième sortie.

L'appareil 10 comprend un troisième circuit 112 d'extraction d'air vicié. Le troisième circuit 112 comprend une troisième entrée 114, indépendante de la première entrée 102. La troisième entrée 114 est par exemple située à l'avant de l'enveloppe 40 et débouche sur le compartiment électrique 56.

Le troisième circuit 112 comprend une troisième sortie 116 débouchant sur le deuxième circuit au niveau du compartiment PAC. De plus, le troisième ventilateur 74 et le troisième échangeur thermique air/air 90 sont disposés sur ledit troisième circuit.

L'appareil 10 comprend un quatrième circuit 120 d'introduction d'air neuf. Le quatrième circuit 120 comprend une quatrième entrée 122, débouchant sur le deuxième circuit au niveau du compartiment 60 d'arrivée d'air extérieur. La quatrième entrée 122 est notamment équipée du premier registre 92.

Le quatrième circuit 120 comprend une quatrième sortie 124 débouchant sur le premier circuit 100, entre le premier échangeur thermique 81 et la première sortie 104. La quatrième sortie 124 est notamment matérialisée par des ouvertures 126 ménagées entre le compartiment de mélange 66 et le compartiment de traitement thermique 54.

Le troisième échangeur thermique air/air 90 est disposé entre les quatrièmes entrée 122 et sortie 124, de sorte à permettre un échange thermique entre l'air circulant dans le troisième circuit 112 et l'air circulant dans le quatrième circuit 120.

L'appareil 10 comprend un cinquième circuit 130 de refroidissement direct ou « free cooling ». Le cinquième circuit 130 comprend une cinquième entrée 132, indépendante de la quatrième entrée 122 et débouchant sur le deuxième circuit au niveau du compartiment 60 d'arrivée d'air extérieur. Le cinquième circuit 130 comprend en outre une cinquième sortie 134, indépendante de la quatrième sortie 124 et débouchant sur le premier circuit 100, entre le premier échangeur thermique 81 et la première sortie 104.

La cinquième entrée 132 et la cinquième sortie 134 sont notamment matérialisées par le deuxième registre 93, apte à mettre en communication le compartiment 60 d'arrivée d'air extérieur et le compartiment de traitement thermique 54.

Les première 102, deuxième 108 et troisième 114 entrées et les première 104 et deuxième 110 sorties sont de préférence équipées de grilles ou filtres 136, 138 de protection. Sur les figures 4, 5 et 6, les grilles 136 équipant les première 102 et troisième 114 entrées et la première sortie 104 sont incorporées à l'enveloppe externe 40. En variante non représentée, l'enveloppe externe comporte une simple ouverture au niveau desdites entrées et sortie ; les grilles de protection sont par exemple incorporées à un caisson d'habillage (non représenté) disposé autour de l'appareil 10 dans le local 24.

L'appareil 10 décrit ci-dessus permet une configuration telle que l'enveloppe externe 40 présente des dimensions modérées, autorisant son installation dans des locaux recevant du public. En particulier, la hauteur selon Z de l'enveloppe 40 peut être choisie inférieure à la hauteur 28, ce qui permet de disposer l'appareil 10 en allège de fenêtre, soit sous la fenêtre 26 comme représenté sur la figure 6.

Des dimensions extérieures possibles pour l'enveloppe 40 selon X, Y et Z sont par exemple 1150 mm x 250 mm x 650 mm. Ces dimensions sont données à titre indicatif.

Un premier procédé de fonctionnement de l'appareil 10 dans l'installation 12 va maintenant être décrit. Ce procédé est mis en oeuvre au moyen d'un programme exécuté par le module électronique de régulation 94.

Le premier procédé de fonctionnement comprend notamment une opération de traitement thermique de l'air du local 24, décrite ci-après :
Le premier ventilateur 70 aspire de l'air intérieur au local 24 par la première entrée 102 et le rejette par la première sortie 104. L'air aspiré traverse le premier échangeur thermique 81 avant d'être rejeté.

Par ailleurs, le deuxième ventilateur 72 aspire de l'air extérieur au bâtiment 14 par la deuxième entrée 108 formée par la première canalisation 46. L'air aspiré traverse le deuxième échangeur thermique 82 avant d'être rejeté par la deuxième sortie 110, formée par la deuxième canalisation 48.

En outre, la pompe à chaleur 80 est en fonctionnement. Ladite pompe permet ainsi un échange thermique entre l'air intérieur et l'air extérieur, au moyen des premier 81 et deuxième 82 échangeurs. En fonction d'une température du local 24, mesurée par une sonde 95, le module électronique de régulation 94 détermine un fonctionnement de la pompe à chaleur 80 en mode chauffage ou en mode refroidissement, pour réchauffer ou refroidir l'air intérieur.

D'autre part, avant d'atteindre la deuxième sortie 110, l'air extérieur traverse le compartiment PAC 58. Cette configuration permet avantageusement d'éviter une surchauffe du compresseur 84 et d'améliorer ainsi le rendement de la pompe à chaleur 80.

Le premier procédé de fonctionnement comprend en outre une opération de renouvellement de l'air du local 24, décrite ci-après :
Les sondes 95, 97 fournissent au module électronique de régulation 94 des informations sur un taux de pollution de l'air et/ou sur la présence d'occupants dans le local 24. Dans le cas d'un taux de pollution supérieur à une valeur seuil et/ou en cas de présence d'occupants, le module électronique 94 déclenche le fonctionnement du troisième ventilateur 74. De l'air du local 24 est aspiré par la troisième entrée 114 et traverse le compartiment électrique 56. Cette configuration permet avantageusement d'éviter une surchauffe des composants reçus dans ledit compartiment, notamment du module électronique 94.

L'air atteint le compartiment 62 d'extraction d'air vicié, puis traverse le troisième échangeur thermique air/air 90 avec lequel il échange des calories. L'air atteint ensuite la troisième sortie 116 ouvrant sur le compartiment PAC 58, puis est rejeté à l'extérieur par la deuxième canalisation 48. L'espacement maximal entre les canalisations 46 et 48 permet de ne pas ré-aspirer l'air rejeté.

Par ailleurs, dans le mode renouvellement d'air, le module électronique 94 commande une ouverture du premier registre 92, en fonction d'un débit d'air requis par le programme. De l'air extérieur passe ainsi du compartiment d'arrivée 60 au compartiment 64 d'introduction d'air neuf par la quatrième entrée 122.

L'air neuf traverse ensuite le filtre 91, puis le troisième échangeur thermique air/air 90 avec lequel il échange des calories. Sa température se rapproche ainsi de celle de l'air intérieur au local 24.

L'air neuf atteint ensuite le compartiment de mélange 66 et la quatrième sortie 124. Il se mélange avec l'air du compartiment de traitement thermique 54 avant d'être rejeté dans le local 24 par la première sortie 104.

En raison de la configuration de l'appareil 10, l'air neuf du quatrième circuit 120 circule dans le troisième échangeur thermique air/air 90 selon un trajet orienté vers le haut. A l'inverse, l'air vicié du troisième circuit 112 circule dans le troisième échangeur thermique selon un trajet orienté vers le bas. Une telle configuration permet la récupération de condensats gravitaires issus des flux d'air.

Dans le cadre du premier procédé ci-dessus, le deuxième registre 93 du cinquième circuit 130 est fermé.

Un deuxième procédé de fonctionnement de l'appareil 10 dans l'installation 12 va maintenant être décrit. Ce procédé est mis en œuvre au moyen d'un programme exécuté par le module électronique de régulation 94.

Ce deuxième procédé, dit de « free cooling », s'applique dans le cas où d'une part la température du local 24 est trop élevée, et d'autre part la température de l'air extérieur est inférieure à la température dudit local.

Le deuxième procédé s'applique également dans le cas inverse, où d'une part la température du local 24 est trop basse, et d'autre part la température de l'air extérieur est supérieure à la température dudit local.

Dans ce cas, il est avantageux d'utiliser l'air extérieur pour refroidir ou réchauffer directement l'air intérieur du local, sans passer par un échangeur thermique.

Le deuxième procédé est identique au premier procédé, à l'exception des aspects suivants: le premier registre 92 du quatrième circuit 120 est fermé; et le deuxième registre 93 du cinquième circuit 130 est ouvert.

De l'air neuf passe donc directement du compartiment d'arrivée 60 au compartiment de traitement thermique 54, ce qui contribue à refroidir ou réchauffer l'air réintroduit dans le local par la première sortie 104.

Eventuellement, selon les températures intérieure et extérieure mesurées par les sondes 95, 96, 97, la pompe à chaleur 80 est à l'arrêt durant le deuxième procédé, ce qui permet des économies d'énergie.

Dans les procédés décrits ci-dessus, le contrôle du degré d'ouverture des registres 92, 93 est effectué au moyen de sondes de pression (non représentées), reliées au module électronique 94 et disposées au niveau desdits registres pour mesurer les débits d'air.

L'appareil 10 décrit ci-dessus est simple à installer dans un bâtiment 14 et permet d'assurer de manière autonome le traitement thermique et le renouvellement de l'air d'un local 24 situé dans ledit bâtiment.

Outre les avantages indiqués précédemment, l'appareil 10 permet de ne percer que deux orifices 30 au total en façade du bâtiment, pour le traitement thermique et le renouvellement d'air. Par comparaison, des dispositifs de l'art antérieur mettant en œuvre des unités distinctes de traitement thermique et de renouvellement d'air nécessitent quatre orifices en façade.

## Revendications

1. Appareil (10) de traitement climatique et de renouvellement d'air pour un local (24) situé dans un bâtiment (14), configuré sous forme monobloc et délimité par une enceinte externe (40) destinée à être disposée à l'intérieur du local,
une bouche d'entrée (46) et une bouche de sortie (48) d'air extérieur, destinées à être raccordées à l'extérieur du bâtiment, étant ménagées sur ladite enceinte externe, où ledit appareil comporte :
- un premier circuit (100) d'air, comprenant une première entrée (102) et une première sortie (104) ; ainsi qu'un premier ventilateur (70) et un premier échangeur thermique air/fluide frigorigène (81) disposés entre la première entrée et la première sortie ;
- un deuxième circuit (106) d'air, comprenant une deuxième entrée (108) et une deuxième sortie (110) respectivement disposées au niveau de la bouche d'entrée et de la bouche de sortie ; ainsi qu'un deuxième ventilateur (72) et un deuxième échangeur thermique air/fluide frigorigène (82) disposés entre la deuxième entrée et la deuxième sortie ;
- un troisième circuit (112) d'air, comprenant une troisième entrée (114) indépendante de la première entrée, une troisième sortie (116) débouchant sur le deuxième circuit entre le deuxième échangeur thermique et la deuxième sortie ; ainsi qu'un troisième ventilateur (74) et un troisième échangeur thermique air/air (90) disposés entre la troisième entrée et la troisième sortie ; et
- un quatrième circuit (120) d'air, comprenant une quatrième entrée (122) débouchant sur le deuxième circuit entre la deuxième entrée et le deuxième échangeur thermique, une quatrième sortie (124) débouchant sur le premier circuit entre le premier échangeur thermique et la première sortie ; le troisième échangeur thermique air/air (90) étant disposé entre les quatrièmes entrée et sortie, de sorte à permettre un échange thermique entre l'air circulant dans le troisième (112) et l'air circulant dans le quatrième (120) circuits ;
les première et troisième entrées et la première sortie d'air étant disposées en surface de l'enceinte externe (40) et destinées à être situées à l'intérieur du local ;
les premier et deuxième échangeurs thermiques air/fluide frigorigène faisant partie d'une pompe à chaleur (80) disposée dans l'enceinte de l'appareil.

2. Appareil selon la revendication 1, comportant en outre un premier organe (92) de régulation de débit d'air, disposé au niveau de la quatrième entrée (114).

3. Appareil selon la revendication 1 ou la revendication 2, comportant en outre un cinquième circuit (130) d'air, ledit cinquième circuit comprenant :
- une cinquième entrée (132), indépendante de la quatrième entrée et débouchant sur le deuxième circuit entre la deuxième entrée et le deuxième échangeur thermique,
- une cinquième sortie (134), indépendante de la quatrième sortie et débouchant sur le premier circuit entre le premier échangeur thermique et la première sortie, et
- un deuxième organe (93) de régulation de débit d'air.

4. Appareil selon l'une des revendications précédentes, dans lequel la pompe à chaleur comporte un compresseur (84), un détendeur (85) et un sixième circuit (86) de fluide frigorigène reliant lesdits compresseur et détendeur aux premier et deuxième échangeurs thermiques,
un premier compartiment (58) ménagé à l'intérieur de l'enceinte recevant ledit compresseur, ledit premier compartiment étant disposé sur le deuxième circuit d'air en aval du deuxième échangeur thermique, la troisième sortie (116) débouchant sur ledit premier compartiment.

5. Appareil selon l'une des revendications précédentes, comprenant en outre des composants électriques et/ou électroniques (94), un deuxième compartiment (56) ménagé à l'intérieur de l'enceinte recevant lesdits composants,
ledit deuxième compartiment étant disposé sur le troisième circuit (112) d'air, en amont du troisième échangeur thermique (90).

6. Appareil selon l'une des revendications précédentes, dans lequel l'enceinte externe (40) est sensiblement parallélépipédique, comprenant notamment une face avant (42), une face arrière (44) et une face supérieure (45), la bouche d'entrée (46) et la bouche de sortie (48) d'air extérieur étant disposées en face arrière de l'enceinte.

7. Appareil selon la revendication 6, dans lequel le troisième échangeur thermique air/air (90) est disposé sensiblement à l'arrière de l'appareil, entre les bouches d'entrée et de sortie selon une direction horizontale.

8. Appareil selon la revendication 7, dans lequel un troisième compartiment (68) ménagé à l'intérieur de l'enceinte reçoit le troisième échangeur thermique, une trappe (69) disposée en face supérieure (45) de l'enceinte donnant accès audit troisième compartiment.

9. Appareil selon la revendication 8, dans lequel le troisième compartiment (68) comprend un dispositif d'assemblage amovible avec le troisième échangeur thermique (90), permettant d'extraire et de remettre ledit troisième échangeur hors du et dans ledit troisième compartiment par la trappe (69).

10. Appareil selon l'une des revendications 6 à 9, dans lequel :
- les bouches d'entrée (46) et de sortie (48) d'air extérieur sont situées en partie basse de la face arrière (44) de l'enceinte ; et
- la troisième entrée d'air (114) est située en partie haute de la face avant (42) de l'enceinte.

11. Appareil selon l'une des revendications 6 à 10, dans lequel la première entrée d'air (102) est située en partie haute de la face avant de l'enceinte ; et la première sortie d'air (104) est située en face supérieure de l'enceinte.

12. Appareil selon l'une des revendications 6 à 11, comprenant deux canalisations d'air (46, 48) formant saillie par rapport à la face arrière de l'enceinte (40) et destinées à déboucher à l'extérieur du bâtiment (14), dans lequel chacune de la bouche d'entrée et la bouche de sortie d'air extérieur est formée par l'une desdites canalisations d'air.

13. Installation (12) de traitement climatique et de renouvellement d'air, comprenant :
- un bâtiment (14) comprenant une paroi extérieure (18), ladite paroi définissant un local (24) situé dans ledit bâtiment ; et
- un appareil (10) de traitement climatique et de renouvellement d'air selon la revendication 12,
dans laquelle :
- la paroi extérieure comprend deux orifices traversants (30) débouchant sur le local d'une part, et sur l'extérieur du bâtiment d'autre part ; et
- l'enceinte (40) de l'appareil est située dans le local, chacune des deux canalisations d'air (46, 48) de l'appareil étant disposée dans l'un desdits orifices traversants.

## Patentansprüche

1. Vorrichtung (10) zur klimatischen Behandlung und zum Austausch von Luft für einen sich in einem Gebäude (14) befindlichen Raum (24), welche in einteiliger Form ausgestaltet ist und durch ein äußeres Gehäuse (40), welches dazu bestimmt ist, im Inneren des Raums angeordnet zu sein, begrenzt ist,
wobei eine Eintrittsöffnung (46) und eine Austrittsöffnung (48) für Außenluft, welche dazu bestimmt sind, mit der Außenseite des Gebäudes verbunden zu sein, an dem äußeren Gehäuse vorgesehen sind,
wobei die Vorrichtung aufweist:
- einen ersten Kreis (100) für Luft, welcher einen ersten Einlass (102) und einen ersten Auslass (104) sowie einen ersten Lüfter (70) und einen ersten Luft/Kältemittel-Wärmetauscher (81), welche zwischen dem ersten Einlass und dem ersten Auslass angeordnet sind, aufweist,
- einen zweiten Kreis (106) für Luft, welcher einen zweiten Einlass (102) und einen zweiten Auslass (104), welche jeweilig an der Eintrittsöffnung und der Austrittsöffnung angeordnet sind, sowie einen zweiten Lüfter (72) und einen zweiten Luft/Kältemittel-Wärmetauscher (82), welche zwischen dem zweiten Einlass und dem zweiten Auslass angeordnet sind, aufweist,
- einen dritten Kreis (112) für Luft, welcher einen dritten Einlass (114), der von dem ersten Einlass unabhängig ist, einen dritten Auslass (116), der zwischen dem zweiten Wärmetauscher und dem zweiten Auslass in den zweiten Kreis mündet, sowie einen dritten Lüfter (74) und einen dritten Luft/Luft-Wärmetauscher (90), welche zwischen dem dritten Einlass und dem dritten Auslass angeordnet sind, aufweist, und
- einen vierten Kreis (120) für Luft, welcher einen vierten Einlass (122), der zwischen dem zweiten Einlass und dem zweiten Wärmetauscher in den zweiten Kreis mündet, einen vierten Auslass (124), der zwischen dem ersten Wärmetauscher und dem ersten Auslass in den ersten Kreis mündet, wobei der dritte Luft/Luft-Wärmetauscher (90) zwischen dem vierten Einlass und Auslass so angeordnet ist, dass ein Wärmeaustausch zwischen der in dem dritten Kreis (112) zirkulierenden Luft und der in dem vierten Kreis (120) zirkulierenden Luft erlaubt ist,
wobei der erste und der dritte Einlass und der erste Auslass von Luft an einer Oberfläche des äußeren Gehäuses (40) angeordnet sind und dazu bestimmt sind, im Inneren des Raums angeordnet zu sein,
wobei der erste und der zweite Luft/Kältemittel-Wärmetauscher Bestandteil einer Wärmepumpe (80) sind, welche in dem Gehäuse der Vorrichtung angeordnet ist.

2. Vorrichtung gemäß dem Anspruch 1, ferner aufweisend ein erstes Organ (92) zur Regulierung des Durchflusses von Luft, welches an dem zweiten Einlass (114) angeordnet ist.

3. Vorrichtung gemäß dem Anspruch 1 oder dem Anspruch 2, ferner aufweisend einen fünften Kreis (130) für Luft, wobei der fünfte Kreis aufweist:
- einen fünften Einlass (132), welcher von dem vierten Einlass unabhängig ist und zwischen dem zweiten Einlass und dem zweiten Wärmetauscher in den zweiten Kreis mündet,
- einen fünften Auslass (134), welcher von dem vierten Auslass unabhängig ist und zwischen dem ersten Wärmetauscher und dem ersten Auslass in den ersten Kreis mündet, und
- ein zweites Organ (93) zur Regulierung des Durchflusses von Luft.

4. Vorrichtung gemäß einem der vorhergehenden Ansprüche, wobei die Wärmepumpe einen Verdichter (84), ein Expansionsventil (85) und einen sechsten Kreis (86) für Kältemittel, welcher den Verdichter und das Expansionsventil mit dem ersten und dem zweiten Wärmetauscher verbindet, aufweist,
wobei eine erste Kammer (58), welche im Inneren des Gehäuses vorgesehen ist, den Verdichter aufnimmt, wobei die erste Kammer in dem zweiten Kreis für Luft stromabwärts des zweiten Wärmetauschers angeordnet ist, wobei der dritte Auslass (116) in die erste Kammer mündet.

5. Vorrichtung gemäß einem der vorhergehenden Ansprüche, ferner aufweisend elektrische und/oder elektronische Komponenten (94), wobei eine zweite Kammer (56), welche im Inneren des Gehäuses vorgesehen ist, besagte Komponenten aufnimmt,
wobei die zweite Kammer in dem dritten Kreis (112) für Luft stromaufwärts des dritten Wärmetauschers (90) angeordnet ist.

6. Vorrichtung gemäß einem der vorhergehenden Ansprüche, wobei das äußere Gehäuse (40) im Wesentlichen quaderförmig, insbesondere mit einer Vorderseite (42), einer Rückseite (44) und einer Oberseite (45), ist, wobei die Eintrittsöffnung (46) und die Austrittsöffnung (48) für Außenluft an der hinteren Fläche des Gehäuses angeordnet sind.

7. Vorrichtung gemäß dem Anspruch 6, wobei der dritte Luft/Luft-Wärmetauscher (90) im Wesentlichen an der Hinterseite der Vorrichtung zwischen der Eintritts- und der Austrittsöffnung entlang einer Horizontalrichtung angeordnet ist.

8. Vorrichtung gemäß dem Anspruch 7, wobei eine dritte Kammer (68), welche im Inneren des Gehäuses vorgesehen ist, den dritten Wärmetauscher aufnimmt, wobei eine an der Oberseite (45) des Gehäuses angeordnete Klappe (69) den Zugang zur dritten Kammer gestattet.

9. Vorrichtung gemäß dem Anspruch 8, wobei die dritte Kammer (68) eine Vorrichtung zur lösbaren Montage mit dem dritten Wärmetauscher (90) aufweist, womit das Entnehmen und Wiedereinsetzen des dritten Wärmetauschers aus der und in die dritte Kammer (68) durch die Klappe (69) erlaubt ist.

10. Vorrichtung gemäß einem der Ansprüche 6 bis 9, wobei:
- sich die Eintrittsöffnung (46) und Austrittsöffnung (48) für Außenluft an einem unteren Teil der Rückseite (44) des Gehäuses befinden, und
- sich der dritte Einlass für Luft (114) an einem oberen Teil der Vorderseite (42) des Gehäuses befindet.

11. Vorrichtung gemäß einem der Ansprüche 6 bis 10, wobei sich der erste Einlass für Luft (102) an einem oberen Teil der Vorderseite des Gehäuses befindet und der erste Auslass für Luft (104) an der Oberseite des Gehäuses angeordnet ist.

12. Vorrichtung gemäß einem der Ansprüche 6 bis 11, aufweisend zwei Luftrohrleitungen (46, 48), welche bezüglich einer Rückseite des Gehäuses (40) vorstehend ausgebildet sind und dazu bestimmt sind, nach außerhalb des Gebäudes (14) auszumünden, wobei jede von der Eintrittsöffnung und der Austrittsöffnung für Außenluft durch eine der Luftrohrleitungen gebildet ist.

13. Anlage (12) zur klimatischen Behandlung und zum Austausch von Luft, aufweisend:
- ein Gebäude (14), welches eine Außenwand (18) aufweist, wobei die Wand einen Raum (24) definiert, welcher sich in dem Gebäude befindet, und
- eine Vorrichtung (10) zur klimatischen Behandlung und zum Austausch von Luft gemäß dem Anspruch 12,
wobei:
- die Außenwand zwei Durchgangsöffnungen (30) aufweist, welche einerseits in den Raum münden und andererseits nach außerhalb des Gebäudes münden, und
- das Gehäuse (40) der Vorrichtung sich in dem Raum befindet, wobei jede der zwei Luftrohrleitungen (46, 48) der Vorrichtung in einer der Durchgangsöffnungen angeordnet ist.

## Claims

1. A climate treatment and air refreshing apparatus (10) for a room (24) located in a building (14), configured in single-piece form and bounded by an external chamber (40) intended to be placed within the room,
an outside air intake (46) and exhaust (48), intended to be connected to the exterior of the building, being built onto said external chamber, wherein said apparatus comprises:
- a first air circuit (100), comprising a first inlet (102) and a first outlet (104); as well as a first fan (70) and a first air/coolant heat exchanger (81) disposed between the first inlet and the first outlet;
- a second air circuit (106), comprising a second inlet (108) and a second outlet (110) respectively disposed at the intake and exhaust; as well as a second fan (72) and a second air/coolant heat exchanger (82) disposed between the second inlet and the second outlet;
- a third air circuit (112), comprising a third inlet (114) independent of the first inlet, a third outlet (116) leading to the second circuit between the second heat exchanger and the second outlet; and a third fan (74) and a third air/air heat exchanger (90) disposed between the third inlet and the third outlet; and
- a fourth air circuit (120), comprising a fourth inlet (122) leading to the second circuit between the second inlet and the second heat exchanger, a fourth outlet (124) leading to the first circuit between the first heat exchanger and the first outlet; the third air/air heat exchanger (90) being disposed between the fourth inlet and outlet, so as to enable a heat exchange between the air circulating in the third circuit (112) and the air circulating in the fourth circuit (120);
the first and third air inlets and the first air outlet being disposed on the surface of the external chamber (40) and intended to be located within the room;
the first and second air/coolant heat exchangers forming part of a heat pump (80) disposed within the chamber of the apparatus.

2. An apparatus according to claim 1, further comprising a first air flow regulation member (92), disposed at the fourth inlet (114).

3. An apparatus according to claim 1 or claim 2, further comprising a fifth air circuit (130), said fifth circuit comprising:
- a fifth inlet (132), independent of the fourth inlet and leading to the second circuit between the second inlet and the second heat exchanger,
- a fifth outlet (134), independent of the fourth outlet and leading to the first circuit between the first heat exchanger and the first outlet, and
- a second air flow regulation member (93).

4. An apparatus according to one of the preceding claims, wherein the heat pump comprises a compressor (84), an expander (85), and a second coolant circuit (86) connecting said compressor and expander to the first and second heat exchangers,
a first compartment (58) built inside the chamber receiving said compressor, said first compartment being disposed on the second air circuit downstream of the second heat exchanger, the third outlet (116) leading to said first compartment.

5. An apparatus according to one of the preceding claims, further comprising electric and/or electronic components (94), a second compartment (56) build inside the chamber receiving said components,
said second compartment being disposed on the third air circuit (112), upstream of the third heat exchanger (90).

6. An apparatus according to one of the preceding claims, wherein the external chamber (40) is substantially parallelepiped in shape, particularly comprising a front face (42), a rear face (44), and a top face (45), the outside air intake (46) and exhaust (48) being disposed on the rear face of the chamber.

7. An apparatus according to claim 6, wherein the third air/air heat exchanger (90) is disposed substantially to the rear of the apparatus, between the intake and exhaust in a horizontal direction.

8. An apparatus according to claim 7, wherein a third compartment (68) built inside the chamber receives the third heat exchanger, a hatch (69) disposed on the top face (45) of the chamber giving access to said third compartment.

9. An apparatus according to claim 8, wherein the third compartment (68) comprises a removable assembly device with the third heat exchanger (90), making it possible to extract and return said third exchanger from and into said third compartment through the hatch (69).

10. An apparatus according to one of claims 6 to 9, wherein:
- the outside air intake (46) and exhaust (48) are located on the lower part of the rear face (44) of the chamber; and
- the third air intake (114) is located on the top part of the front face (42) of the chamber.

11. An apparatus according to one of the claims 6 to 10, wherein the first air inlet (102) is located on the top part of the front face of the chamber; and the first air outlet (104) is located on the top face of the chamber.

12. An apparatus according to one of claims 6 to 11, comprising two air channels (46, 48) protruding past the rear face of the chamber (40) and intended to lead to the exterior of the building (14), wherein both the said outside air intake and exhaust are formed by one of said air channels.

13. A climate treatment and air refreshing installation (12), comprising:
- a building (14) comprising an exterior wall (18), said wall defining a room (24) located within said building; and
- a climate treatment and air refreshing apparatus (10) according to claim 12,
wherein:
- the exterior wall comprises two through-holes (30), leading on one end to the room and on the other to the exterior of the building; and
the chamber (40) of the apparatus is located in the room, each one of the two air channels (46, 48) being disposed on one of said through-holes.
